# EUROPÄISCHE PATENTANMELDUNG

(11) **EP 1 787 957 A1**
(43) Veröffentlichungstag der Anmeldung: **23.05.2007**
(21) Anmeldenummer: 05025001.8
(22) Anmeldetag: 16.11.2005
(51) Int. Cl.: C01B 33/18, B01F 7/18

(54) **Trockene Flüssigkeiten, Verfahren und Vorrichtung zu ihrer Herstellung**

(71) Anmelder: Degussa GmbH, 40474 Düsseldorf (DE)
(72) Erfinder: Pitsch, Holger, 63533 Mainhausen (DE); Piroth, Josef, 63875 Mespelbrunn (DE); Riedemann, Thomas, 63776 Mömbris (DE); Riedemann, Heike, 63776 Mömbris (DE); Gray, Ann, 63452 Hanau (DE); Huenig, Frank Dieter, 63791 Karlstein (DE)

(57) **Zusammenfassung**

Trockene Flüssigkeiten, enthaltend eine hydrophobe, pyrogen hergestellte Kieselsäure mit einer Einzeltropfengröße von unter 5 µm, werden hergestellt, indem man die Flüssigkeit und die hydrophobe Kieselsäure mittels eines Intensivrührers vermischt, wobei man gleichzeitig eines randgängigen Rührers bewegt und den Instensivrührer in seiner axialen Richtung bewegt.

## Beschreibung

Die Erfindung betrifft trockene Flüssigkeiten, ein Verfahren und eine Vorrichtung zu ihrer Herstellung.

Trockene Flüssigkeiten, insbesondere trockenes Wasser, sind bekannt aus US 3,393,155.

Sie bestehen aus pyrogen hergestellter Kieselsäure, die eine mittlere Teilchengröße von nicht größer 50 Millimikron aufweist, deren Oberfläche hydrophobiert worden ist und die 5 bis 10-fache Menge an Flüssigkeit eingekapselt enthalten.

Das Pulver (trockenes Wasser) weist trotz des großen Anteils an Wasser eine pulverförmige Erscheinungsform auf.

Das bekannte trockene Pulver kann hergestellt werden, indem man die Flüssigkeit in feine Tröpfchen zerteilt und diese feinen Tröpfchen mit hydrophobiertem, pyrogen hergestelltem Siliciumdioxid unter hohem Energieeintrag derart vermischt, daß die Tröpfchen der Flüssigkeit vollständig von der hydrophobierten Kieselsäure umhüllt werden (US 3,393,155).

Es ist weiterhin bekannt, eine Bohrflüssigkeitskomponente herzustellen, indem man Wasser mit einer hydrophoben, pyrogen hergestellten Kieselsäure unter Hochscherbedingungen vermischt und kombiniert, wobei ein fließfähiges, trockenes, pulverförmiges, festes Produkt erhalten wird.

Das Vermischen kann unter Hochscherbedingungen erfolgen. So kann im Labor eine Hochgeschwindigkeitspumpe oder ein Dispergator verwendet werden.
Im größeren Maßstab kann man einen rotierenden, mit Blättern versehenen Rührer, eine Mischpumpe oder jeden anderen Mischer verwenden, der geeignet ist, hohe Scherenergie in die Mischung einzubringen (US 3,951,824).

Es ist weiterhin bekannt, durch Verrühren von Siliciumdioxid mit Wasser trockenes Wasser herzustellen und als Feuerlöschmittel zu verwenden. Es kann bei tiefen Temperaturen gelagert werden, weil es seine Fließfähigkeit als Pulver selbst bei extremen tiefen Temperaturen nicht verliert (US 5,342,597 und US 4,008,170).

Es ist weiterhin bekannt, trockenes Wasser herzustellen, indem man als Vorrichtungen für die Hochgeschwindigkeitsbewegung der Mischung einen "rocking mixer" oder eine Schüttelvorrichtung verwendet (US 2004/0028710 A1).

Die bekannten Verfahren weisen den Nachteil auf, daß nur relativ kleine Mengen an trockenem Wasser hergestellt werden können.

Weiterhin weisen die bekannten trockenen Flüssigkeiten nur eine begrenzte Lagerstabilität auf.

Es bestand somit die Aufgabe eine trockene Flüssigkeit zu entwickeln, die diesen Nachteil nicht aufweist. Zudem ist ein Verfahren zu entwickeln, mit dem größere Mengen an trockenem Wasser hergestellt werden können.

Gegenstand der Erfindung sind trockene Flüssigkeiten, enthaltend eine hydrophobe, pyrogen hergestellte Kieselsäure, welche dadurch gekennzeichnet sind, dass die Einzeltropfengröße unterhalb von 5 µm liegt.

Bevorzugt kann die Einzeltropfengröße im Bereich von 1 bis 4,5 µm liegen.

Ein weiterer Gegenstand der Erfindung sind trockene Flüssigkeiten, enthaltend eine hydrophobe, pyrogene Kieselsäure, welche gekennzeichnet sind, durch die folgenden physikalisch-chemischen Parameter:

**Teilchengrößenverteilung (Agglomeratgrößenverteilung (Durchgangssumme)**

| | |
|---|---|
| D10% | 80 bis 140 µm |
| D50% | 140 bis 200 µm |
| D90% | 190 bis 340 µm |
| Schüttgewicht DIN 53912 kg/m³ | 400 bis 500 |
| Stampfdichte DIN ISO 787 kg/m³ | 500 bis 600 |
| Feststoffanteil DIN 53 198 % | 4 bis 10 |

Ein weiterer Gegenstand der Erfindung ist ein Verfahren zur Herstellung der trockenen Flüssigkeiten, welches dadurch gekennzeichnet, daß man die Flüssigkeiten und die hydrophobe, pyrogen hergestellte Kieselsäure in einem Gefäß einträgt und dort mittels Intensivrührers vermischt, wobei man gleichzeitig einen randgängigen Rührer bewegt und den Intensivrührer in seiner axialen Richtung bewegt.

Erfindungsgemäß werden mit dem Intensivrührer, gegebenenfalls mittels Scherung Flüssigkeitstropfen erzeugt.

Diese Flüssigkeitstropfen werden mit der hydrophoben, pyrogen hergestellten Kieselsäure in Kontakt gebracht. Der Rührer kann ein randgängiges langsam drehendes Rührwerk sein, mit welchem das Material aus den toten Zonen, in denen keine Durchmischung mittels des Intensivrührers erfolgt, in dem Scherbereich des Intensivrührers transportiert wird.

Durch die axiale Bewegung, wie zum Beispiel eine Auf- und Abwärtsbewegung, kann sichergestellt werden, daß eine Durchmischung in axialer Richtung erfolgt.

Das Gefäß kann eine zylinderförmige, eine kugelförmige, eine mit einem Konus ausgestatteten zylinderförmige oder eine mit einer Kugelform ausgestattete zylinderförmige Geometrie aufweisen.

Als Intensivrührer können Zahnscheibenrührer eingesetzt werden.

Unter Flüssigkeiten können Wasser, wässrige Salzlösungen, wässrige Lösungen von Glycerin und ähnliche wassermischbare flüssige Komponenten in Pharmazeutika, Kosmetika etc. verstanden werden.

Ein weiterer Gegenstand der Erfindung ist eine Vorrichtung zur Durchführung des Verfahrens zur Herstellung von trockenen Flüssigkeiten, welche dadurch gekennzeichnet ist, daß sie aus dem Intensivrührer (1), dem Behälter (3) sowie dem randgängigen Rührer (10) besteht, wobei der Intensivrührer (1) in axialer Richtung beweglich angeordnet ist.

Die Erfindung weist den Vorteil auf, dass eine trockene Flüssigkeit entwickelt wurde, die eine gute Lagerstabilität aufweist.

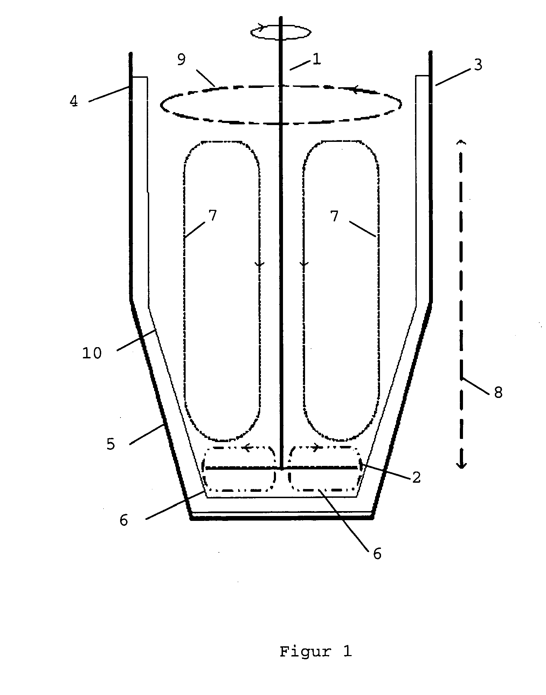

Das erfindungsgemäße Verfahren sowie die erfindungsgemäße Vorrichtung werden an Hand der Zeichnung näher erläutert und beschrieben:
- Gemäß Figur 1: wird der Zahnscheibenrührer 1 als Intensivrührwerk mit einer Umfangsgeschwindigkeit von 12 bis 45 m/s betrieben. Der Zahnscheibenrührer 1 weist die Zahnscheibe 2 auf und wird im Uhrzeigersinn gedreht. Der Behälter 3 weist einen zylindrischen Teil 4 und einen konischen Teil 5 auf.
Das Verhältnis der Durchmesser Zylinder 4 zu Konus 5 beträgt 1 bis 0,3.
Das Verhältnis von Konus 5 zu Intensivrührwerk beträgt 0,9 bis 0,3. Das Verhältnis von Höhe zum Durchmesser des Zylinders 4 beträgt 1 bis 2.
Das Verhältnis von Höhe zu Durchmesser Konus 5 beträgt 1 bis 3.

Bei Drehung des Intensivrührers 1 ergeben sich die folgenden Bewegungen und Produktströme:

| | |
|---|---|
| -··-··-··-·· | Produktströmung radial (6) |
| ................. | Produktströmung axial (7) |
| _ _ _ _ _ | Bewegung Intensivmischaggregates (8) |
| - · - · - · - · - | Bewegung Räumarm (9) |

Die Produktströme 6 und 7 ergeben sich aus der Rotation des Intensivrührers 1, der axial im Sinne der Bewegung 8 vertikal bewegt werden kann.

Bei dem alleinigen Betrieb des Intensivrührers 1 in nur einer vertikalen Ebene bilden sich an der Behälterwand Wassernester aus, weil sich die Tropfenbildung mit zunehmender Pulverbildung verändert. Auf Grund des veränderten Fließverhaltens bilden sich tote Zonen aus.

Die Bewegung 9 des Räumarmes des randgängigen Ankerrührers 10 verhindert die Bildung von Wassernestern und toten Zonen. Es erfolgt eine gleichmäßige Durchmischung. Die Bewegung des Räumarmes des Ankerrührers 10 kann 0,2 bis 2 m/s betragen.

### Beispiel:

Mit der erfindungsgemäßen Vorrichtung gemäß Figur 1 werden trockene Flüssigkeiten hergestellt:

Die einzelnen Bedingungen sind in der Tabelle 1 aufgeführt:

**Tabelle 1**

| **Versuchnummer** | **Zusammensetzung** | | | **Herstellungsmethode** | **Gesamtmischzeit (min)** | **Umfangsgeschwindigkeit (m/s)** | **Trockenrückstand (%)** |
|---|---|---|---|---|---|---|---|
| | AEROSIL | VE- Wasser | Additiv | | | | |
| 01 | 5% | 95% | | Intensivrührwerk | 7 | 23,8 | 4,49 |
| 02 | 5% | 95% | | Intensivrührwerk | 10 | 28,1 | 5,04 |
| 03 | 5% | 95% | | Intensivrührwerk | 5 | 36,6 | 4,87 |
| 04 | 5% | 95% | | Intensivrührwerk | 15 | 32,1 | 5,21 |
| 05 | 5% | 94,90% | 0,10% | Intensivrührwerk | 15 | 32,1 | 4,94 |
| 06 | 5% | 95% | | Intensivrührwerk | 30 | 32,1 | 4,99 |
| 06 | 5% | 95% | | Intensivrührwerk | 30 | 39,3 | 4,99 |
| 07 | 5% | 95% | | Intensivrührwerk | 9 | 38,5 | 5,00 |

**Tabelle 2:**

| | | Bsp.: Intensivrührwerk | |
|---|---|---|---|
| Teilchengrößenverteilung (Durchmgangssumme) | D10% | 103 | 114 |
| | D50% | 158 | 184 |
| | D90% | 236 | 315 |
| Schüttgewicht DIN 53912 [kg/m³] | | 471 | 493 |
| Stampfgewicht DIN/ISO 787 [kg/m³] | | 558 | 567 |
| Feststoffanteil DIN 53198 [%] | | 4,9 | 4,9 |
| Umfangsgeschwindigkeit [m/s] | | 32 | 38,5 |
| Flüssige Komponente | | Wasser | Wasser |

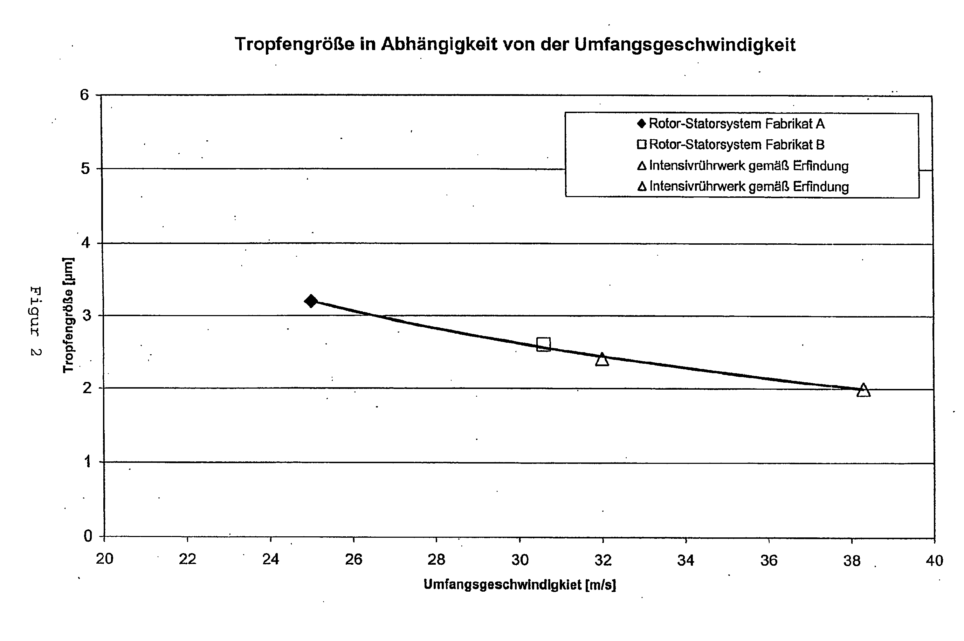

Die Abhängigkeit der Größe der Einzeltropfen von der Umfangsgeschwindigkeit ist in der Figur 2 graphisch dargestellt.

Die Teilchengrößen der Einzeltropfen wird mittels TEM-Analyse (Bredanalyse) an der gefriergetrockneten (kryopräparierten) trockenen Flüssigkeit durchgeführt.

Die Kryo-Präparation erfolgt wie folgt.

Bei der Kryo-Präparation wird zunächst die Kryo-Präparationskammer mit flüssigem Stickstoff auf ca. 100 K abgekühlt. Eine Heizung verdampft bei geöffneter Präparationskammer N₂, sodaß die Präparation in einer trockenen N₂-Atmosphäre erfolgt. Der Präparatehalter wird durch Einfüllen von flüssigem N₂ in das Dewar des Halters ebenfalls auf ca. 100 K abgekühlt.

Für die Präparation 1 wurde "trockenes Wasser" auf ein mit einer dünnen Polymerschicht beschichtetem Präparationsträgernetzchen aufgestäubt und in der tiefgekühlten Präparationskammer auf dem Stück Filterpapier abgelegt und eingefroren.

Für die Präparation 2 wurde in einen Kupferbehälter Ethan verflüssigt. Ein mit "trocknem Wasser" bestäubtes Netzchen wurde in das Ethan eingetaucht. Aufgrund der höheren Wärmekapazität des verflüssigten Ethans wird im Gegensatz zur Präparation 1 hier das Wasser schlagartig, in der Regel amorph, eingefroren. Die Probe kann sich im Gegensatz zur Präparation 1 beim Abkühlen nicht mehr verändern.

Die eingefrorenen Präparate wurden anschließend in den Präparatehalter überführt und in das Transmissionselektronenmikroskop transferiert. Aufgrund des tiefgekühlten Halters können die Präparate im gefrorenen Zustand im TEM analysiert werden.

Die Agglomeratgrößenverteilung wird mittels Camsizer der Firma RETSCH GmbH % Co. KG D-42781 Haan ermittelt.

## Patentansprüche

1. Trockene Flüssigkeiten, enthaltend eine hydrophobe, pyrogen hergestellte Kieselsäure, **dadurch gekennzeichnet, dass** die Einzeltropfengröße unterhalb von 5 µm liegt.

2. Trockene Flüssigkeiten, enthaltend eine hydrophobe, pyrogen hergestellte Kieselsäure gemäß Anspruch 1, **gekennzeichnet durch** die folgenden physikalisch-chemischen Parameter:
**Teilchengrößenverteilung (Agglomeratgrößenverteilung) (Durchgangssumme)**
| | |
|---|---|
| D10% | 80 bis 140 µm |
| D50% | 140 bis 200 µm |
| D90% | 190 bis 340 µm |
| Schüttgewicht DIN 53912 kg/m³ | 400 bis 500 |
| Stampfdichte DIN ISO 787 kg/m³ | 500 bis 600 |
| Feststoffanteil DIN 53 198 % | 4 bis 10 |

3. Verfahren zur Herstellung von trockenen Flüssigkeiten gemäß Anspruch 1 oder 2, **dadurch gekennzeichnet, daß** man die Flüssigkeit und die hydrophobe, pyrogen hergestellte Kieselsäure in einem Gefäß einträgt und dort mittels eines Intensivrührers vermischt, wobei man gleichzeitig einen randgängigen Rührer bewegt und den Intensivrührer in seiner axialen Richtung bewegt.

4. Vorrichtung zur Durchführung des Verfahrens gemäß Anspruch 3, **dadurch gekennzeichnet, daß** sie aus dem Intensivrührer (1), dem Behälter (3), sowie dem Rührer (10) besteht, wobei der Intensivrührer (1) in axialer Richtung beweglich angeordnet ist.
